# EUROPÄISCHE PATENTANMELDUNG

(11) **EP 1 483 956 A1**
(43) Veröffentlichungstag der Anmeldung: **08.12.2004**
(21) Anmeldenummer: 04008687.8
(22) Anmeldetag: 10.04.2004
(51) Int. Cl.: A01D 75/18, A01F 29/16

(54) **Landmaschine mit einer Diagnoseeinheit zur Kontrolle der Funktionsfähigkeit einer Fremdkörpersensoreinheit**

(30) Priorität: 03.06.2003 DE 10325252
(71) Anmelder: CLAAS Saulgau GmbH, 88348 Bad Saulgau (DE)
(72) Erfinder: Rauch, Hans, 88348 Bad Saulgau (DE); Schulze, Klaus, 01844 Hohwald (DE)
(74) Vertreter: Patentanwälte Eisele, Otten, Roth & Dobler

(57) **Zusammenfassung**

Es wird eine Landmaschine mit einer Aufnahmeeinheit für in einer Bearbeitungseinheit zu bearbeitendes Gut, insbesondere Erntegut und einer Sensoreinheit mit wenigstens einem Metalldetektor zur Erfassung von metallischen Gegenständen im aufzunehmenden oder aufgenommenen Gutstrom vorgeschlagen, bei der die Gefahr der unerwünschten Aufnahme von störenden Metallgegenständen zumindest vermindert wird. Dies wird erfindungsgemäß dadurch erreicht, dass eine Diagnoseeinheit zur Kontrolle der Funktionsfähigkeit der Sensoreinheit für die Metalldetektion vorgesehen ist.

## Beschreibung

Die Erfindung betrifft eine Landmaschine nach dem Oberbegriff des Anspruchs 1.

Landmaschinen, insbesondere mit Metalldetektoren sind mittlerweile vielfach in Gebrauch. Die Metalldetektoren dienen dazu, etwaige metallische Fremdkörper, die mit dem zu bearbeitenden Gut aufgenommen werden, zu erkennen und die entsprechende Maschine bzw. einzelne Einheiten dieser Maschine zum Schutz vor Beschädigungen zu stoppen.

Solche Landmaschinen sind beispielsweise in Form von sogenannten Feldhäckslern bekannt, die Erntegut, z.B. Maispflanzen als Grünfutter schneiden, aufnehmen und einer Häckseltrommel zuführen. Bei der unerwünschten Mitführung von störenden Metallgegenständen können die einzelnen Förderorgane sowie vor allem auch die Häckslertrommel stark in Mitleidenschaft gezogen werden. Aus diesem Grund sind derartige Metalldetektoren im Einsatz, um die zum Teil erheblichen Folgekosten bezüglich einer Reparatur, unverwertbarem Erntegut und Ausfallzeit zu vermeiden.

Bislang werden derartige Metalldetektoren nur durch ein fehlgeschlagenes, zu detektierendes Ereignis, d.h. dem unerwünschten Einzug von Metallgegenständen oder turnusmäßig bei Instandsetzungen oder Generaldurchsichten der Maschine überprüft. Sofern zwischen diesen Zeitintervallen ein Defekt im Metalldetektor auftritt, so sind infolgedessen die gleichen Schäden zu erwarten, wie bei einer Maschine ohne Metalldetektor.

Aufgabe der Erfindung ist es daher, eine Landmaschine der angeführten Art mit einer Aufnahmeeinheit für in einer Bearbeitungseinheit zu bearbeitendes Gut, insbesondere Erntegut, und einer Sensoreinheit mit wenigstens einem Metalldetektor zur Erfassung von metallischen Gegenständen im aufzunehmenden oder aufgenommenen Gutstrom vorzuschlagen, bei der die oben angeführten Nachteile und somit auch die aufgeführten Folgeschäden vermindert oder ganz vermeidbar sind.

Diese Aufgabe wird ausgehend von einer Landmaschine nach dem Oberbegriff des Anspruchs 1 durch dessen kennzeichnende Merkmale gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Landmaschine dadurch aus, dass eine Diagnoseeinheit zur Kontrolle der Funktionsfähigkeit der Sensoreinheit vorgesehen ist.

Zu bestimmten Zeitpunkten, beispielsweise bei jedem Betriebsstart der Landmaschine, bestimmten Zeitzyklen oder zufällig ermittelten Zeitpunkten kann damit die Funktionsfähigkeit der Sensoreinheit und insbesondere des Metalldetektors getestet werden, so dass die Gefahr der Aufnahme eines metallenen Störgegenstandes weitgehend reduziert, wenn nicht ganz vermieden ist.

In einer besonderen Ausführungsform der Erfindung umfasst die Sensoreinheit wenigstens einen Magnetsensor, z.B. eine Sensorspule. Mit Hilfe einer solchen Sensorspule können unmittelbar magnetische Gegenstände oder aber auch die Auswirkung von metallischen Gegenständen auf ein vorhandenes Magnetfeld erfasst und zur Detektion verwendet werden. Diese Ausführungsform bietet den Vorteil, dass bekannte bereits im Einsatz befindliche Sensoreinheiten verwendbar sind.

Die erfindungsgemäße Diagnoseeinheit umfasst vorteilhafterweise wenigstens eine Diagnosespule. Mit Hilfe einer solchen Diagnosespule könnten elektromagnetische Signale gesendet werden, die über eine entsprechende Empfangseinheit der Sensoreinheit, z.B. einer Sensorspule wie oben angeführt, zu erfassen sind. Insbesondere mit Hilfe eines Magnetsensors der Sensoreinheit, wie der oben angeführten Sensorspule, ist eine solches Signal erfassbar und somit für die erfindungsgemäße Kontrolle der Funktionsfähigkeit verwendbar.

Weiterhin umfasst die Diagnoseeinheit vorteilhafterweise einen Testgenerator zur Erzeugung von Testsignalen. Solche Testsignale können über entsprechende Sender, beispielsweise die oben angeführten Diagnosespulen auf die Sensoreinheit übertragen werden. Die von der Sensoreinheit empfangenen Signale können daraufhin ausgewertet werden, um eine Aussage über die Funktionsfähigkeit der Sensoreinheit zu treffen.

Vorteilhafterweise umfasst die Sensoreinheit weiterhin einen Magneten zur Erzeugung eines Sensormagnetfeldes. Ein solcher Magnet dient dazu, ein Magnetfeld zu erzeugen, das durch die zu erfassenden metallischen Gegenstände gestört wird. Dieses Sensormagnetfeld wird dabei bevorzugt als konstantes Magnetfeld, beispielsweise mit Hilfe eines Permanentmagneten ausgebildet, es ist jedoch durchaus auch denkbar, dieses Sensormagnetfeld wiederum durch einen oder mehrere Elektromagnete zu erzeugen. In diesem Fall kann gegebenenfalls ein solcher Elektromagnet unmittelbar als Sender bzw. Diagnosespule verwendet werden.

Die Auswertung des Diagnosesignals, d.h. der durch Testsignale in der Sensoreinheit hervorgerufenen Signale können insbesondere im Hinblick auf die Intensität und die Phasenlage vorgenommen werden. Somit lassen sich unterschiedliche Aussagen über die Funktionsfähigkeit der Sensoreinheit treffen.

Bevorzugt wird das Testsignal dabei veränderlich ausgebildet. Dies ist insbesondere dazu von Vorteil, nicht nur die generelle Funktionsfähigkeit der Sensoreinheit zu testen, sondern zugleich deren Empfindlichkeit zu erfassen.

Hierzu wird in einer besonderen Ausführungsform eine Sequenz von Testsignalen mit unterschiedlichen Intensitäten vorgesehen. Die Auswertung der dadurch hervorgerufenen unterschiedlichen Sensorsignale lässt sich dabei insbesondere im Hinblick auf die Empfindlichkeit der Sensoreinheit vornehmen.

In einer bestimmten Weiterbildung des vorgenannten Ausführungsbeispiels wird ein stufenweiser Anstieg der Intensitäten aufeinanderfolgender Testsignale oder Testimpulse vorgesehen. Dies kann beispielsweise durch eine sogenannte Treppenfunktion oder eine Sequenz von Impulsen mit schrittweise ansteigender Amplitude erfolgen, d.h. die Intensität wird jeweils nach einer bestimmten Zeit Δt um eine Intensität ΔI angehoben. Auch die Zeitabstände der Testsignale können verschieden sein. Das durch die Sensoreinheit erfasste Sensor- bzw. Antwortsignal kann hierbei sowohl im Hinblick auf die Intensität als auch auf die Phasenlage der Sensorsignale im Vergleich zu den einzelnen Stufen der Testsignale ausgewertet werden.

Vorzugsweise werden mehrere Sensoreinheiten und/oder mehrere Diagnoseeinheiten vorgesehen. Auf diese Weise kann der Gutstrom an unterschiedlichen Orten auf Fremdkörper hin überwacht werden.

Die oben angeführte Ausführungsform wird vorteilhafterweise dadurch weitergebildet, dass ein Multiplexer für die Umschaltung der Testsignale und/oder der Auswerteeinheit an entsprechende Sensoreinheiten vorgesehen ist. Hierdurch wird die Anzahl der erforderlichen Teile insbesondere bei der Mehrfachanwendung von Sensoreinheiten und Diagnoseeinheiten reduziert.

Wie bereits oben angeführt, werden bevorzugt Diagnosespulen für die Aussendung von Testsignalen sowie Sensorspulen zur Erfassung der Antwort in der Sensoreinheit verwendet.

Es ist jedoch auch der Einsatz anderer magnetischer und/oder nicht magnetischer Sensoren, beispielsweise von Hall-Sensoren denkbar. Ein Hall-Sensor ist nicht nur auf Schwankungen eines Magnetfelds empfindlich, sondern in der Lage, die Stärke eines Magnetfelds am jeweiligen Ort zu messen. Er kann daher auch dauerhafte Störungen erkennen und beispielsweise auch eine konstante Dauerbestromung der Diagnosespulen erfassen.

In einer Weiterbildung dieser Ausführungsform werden unterschiedliche Messwertaufnehmer vorgesehen, um die dadurch gewonnenen Antwortsignale in der Auswertung im Hinblick auf die jeweilige Empfindlichkeit oder Messgröße zu kombinieren.

Das Ergebnis der Auswertung, z.B. das Nichterkennen eines Fremdkörpers, wird vorzugsweise in einer optischen und/oder einer akustischen Anzeige für eine Bedienperson angezeigt, so dass diese den Betrieb der Maschine unterbrechen und die Sensoreinheit wieder in einen ordnungsgemäßen Zustand versetzen kann, bevor ein Schaden durch etwaige nicht detektierte Fremdkörper auftritt.

Darüber hinaus ist auch ein automatischer Eingriff in den Arbeitsablauf der Maschine denkbar, um bei nicht funktionsfähiger Sensoreinheit den Gutstrom wenigstens teilweise zu unterbrechen oder vollständig stillzulegen.

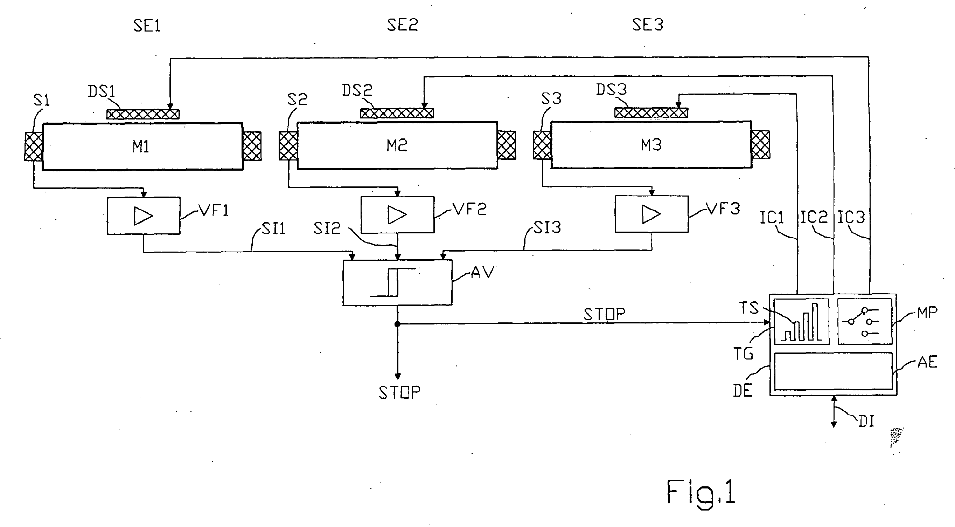

Ein Ausführungsbeispiel der Erfindung ist in der Zeichnung dargestellt und wird nachfolgend anhand der Beschreibung näher erläutert.

Die einzige Figur zeigt ein Schaltdiagramm für eine Sensoreinheit mit Diagnoseeinheit für eine erfindungsgemäße Landmaschine.

Die dargestellte Sensoreinheit ist in verschiedene Segmente SE1, SE2, SE3 unterteilt. Diese Segmente SE1, SE2, SE3 können an unterschiedlichen Stellen eingesetzt werden und dementsprechend den Gutstrom an verschiedenen Orten auf störende Metallgegenstände überwachen.

Jedes Segment SE1, SE2, SE3 umfasst einen Magneten M1, M2, M3, der ein Permanentmagnet oder aber auch ein Elektromagnet sein kann. Im magnetischen Feld der Magnete M1, M2, M3 ist jeweils eine Sensorspule S1, S2, S3 angeordnet, die in der Lage ist, Störungen des durch die Magnete M1, M2, M3 erzeugten Magnetfelds zu erfassen. Eine solche Störung kann beispielsweise durch einen metallischen Fremdkörper verursacht werden, der in der Nähe vorbeigeführt wird. Das Sensorsignal wird in Verstärkern VF1, VF2, VF3, die bei Bedarf elektronische Filter beinhalten können, verstärkt und in einer Auswertevorrichtung AV ausgewertet.

Die Diagnoseeinheit DE umfasst zunächst eine Diagnoseelektronik, die zum einen einen Testgenerator TG zur Erzeugung von Testsignalen TS und zum anderen einen Multiplexer MP zum Schalten des Testsignals auf verschiedene Ausgangsleitungen IC1, IC2, IC3 aufweist, und eine Auswerteeinheit AE, die den Gesamtablauf der Diagnose steuert sowie die Auswertung der Antwortsignale auf die Testsignale übernimmt. Diese Testsignale können beispielsweise in Form von Konstantströmen innerhalb eines Zeitintervalls Δt vorliegen, deren Stromstärke in einer Treppenfunktion hochgefahren werden.

Die Testsignale IC1, IC2, IC3 werden auf Diagnosespulen DS1, DS2, DS3 z.B. bei Einsatz eines Multiplexbetriebes alternierend aufgegeben. Diese Diagnosespulen DS1, DS2, DS3 erzeugen dementsprechend Magnetfelder, die die Magnetfelder von M1, M2, M3 beeinflussen, d.h. gewissermaßen gezielt stören. Diese Teststörungen werden von den Sensorspulen S1, S2, S3 aufgenommen und an die Auswertevorrichtung AV weitergeleitet.

Über das Ausgangssignal der Auswertevorrichtung AV kann in der Auswerteeinheit AE hierdurch zum einen die generelle Funktionsfähigkeit der Sensoreinheit kontrolliert und zum anderen auch deren Empfindlichkeit aufgrund der Treppenfunktion der Testsignale erfasst werden. Eine Auswertung kann hierbei beispielsweise nach Phasenlage und Intensität des Antwortsignals auf die Testsignale vorgenommen werden.

Durch die signalmäßige Kopplung der Auswertevorrichtung AV mit der Diagnoseelektronik kann diese z.B. den Diagnosevorgang starten oder, je nach Ausführungsform, auch die Art des Testsignals beeinflussen oder den Multiplexer MP ansteuern.

Bei einer fehlerhaften Sensoreinheit bzw. einem fehlerhaften Sensorsegment SE1, SE2, SE3 kann die Diagnoseeinheit (DE) eine Diagnoseinformation (DI) generieren, um den Antrieb einzelner oder mehrerer Komponenten im Gutstrom zu stoppen. Weiterhin kann die Diagnoseeinheit DE eine entsprechende optische oder akustische Anzeige für eine Bedienperson ansteuern, so dass diese für eine Instandsetzung der Sensoreinheit vor einem Weiterbetrieb der Landmaschine sorgen kann.

Die dargestellte Ausführungsform zeigt die Erfindung nur beispielhaft. Neben den in Form von Sensorspulen S1, S2 und S3 vorgesehenen Sensoren können auch andere Sensortypen, beispielsweise kapazitive Sensoren oder andere Magnetsensoren wie Hall-Sensoren oder dergleichen zum Einsatz kommen. Wesentlich ist, dass eine Selbstkontrolle der Sensoreinheit SE1, SE2, SE3 erfolgt, so dass ein Betrieb der Landmaschine mit nicht funktionierender Fremdkörperdetektion unterbunden werden kann.

## Patentansprüche

1. Landmaschine mit einer Aufnahmeeinheit für in einer Bearbeitungseinheit zu bearbeitendes Gut, insbesondere Erntegut, und einer Sensoreinheit mit wenigstens einem Fremdkörperdetektor zur Erfassung von Fremdkörpern im aufzunehmenden oder aufgenommenen Gutstrom, **dadurch gekennzeichnet, dass** eine Diagnoseeinheit (DE, DS1, DS2, DS3) zur Kontrolle der Funktionsfähigkeit der Fremdkörper-Sensoreinheit vorgesehen ist.

2. Landmaschine nach Anspruch 1, **dadurch gekennzeichnet, dass** der Fremdkörperdetektor ein Metalldetektor ist.

3. Landmaschine nach einem der vorgenannten Ansprüche, **dadurch gekennzeichnet, dass** die Sensoreinheit wenigstens eine Sensorspule (S1, S2, S3) umfasst.

4. Landmaschine nach einem der vorgenannten Ansprüche, **dadurch gekennzeichnet, dass** die Diagnoseeinheit wenigstens eine Diagnosespule (DS1, DS2, DS3) umfasst.

5. Landmaschine nach einem der vorgenannten Ansprüche, **dadurch gekennzeichnet, dass** die Diagnoseeinheit einen Testgenerator (TG) zur Erzeugung von Testsignalen (TS) umfasst.

6. Landmaschine nach einem der vorgenannten Ansprüche, **dadurch gekennzeichnet, dass** die Sensoreinheit einen Sensormagneten (M1, M2, M3) umfasst.

7. Landmaschine nach einem der vorgenannten Ansprüche, **dadurch gekennzeichnet, dass** eine Auswerteelektronik (AE) zur Auswertung des von den Sensoreinheiten (SE1, SE2, SE3) aufgenommenen Antwortsignals auf die Testsignale (TS) vorgesehen ist.

8. Landmaschine nach einem der vorgenannten Ansprüche, **dadurch gekennzeichnet, dass** eine Auswertung der Intensität und der Phasenlage des Sensorsignals vorgesehen ist.

9. Vorrichtung nach einem der vorgenannten Ansprüche, **dadurch gekennzeichnet, dass** das bzw. die Testsignale veränderbar sind.

10. Landmaschine nach einem der vorgenannten Ansprüche, **dadurch gekennzeichnet, dass** eine Sequenz von Testsignalen mit unterschiedlicher Intensität und/oder zeitlichen Abständen vorgesehen ist.

11. Landmaschine nach einem der vorgenannten Ansprüche, **dadurch gekennzeichnet, dass** das Testsignal eine Treppenfunktion aufweist.

12. Landmaschine nach einem der vorgenannten Ansprüche, **dadurch gekennzeichnet, dass** ein Multiplexer für die Testsignale und/oder die Sensorsignale vorgesehen ist.

13. Landmaschine nach einem der vorgenannten Ansprüche, **dadurch gekennzeichnet, dass** auf unterschiedlichen technischen Prinzipien beruhende Messwertaufnehmer vorgesehen sind.

14. Landmaschine nach einem der vorgenannten Ansprüche, **dadurch gekennzeichnet, dass** wenigstens ein Hall-Sensor vorgesehen ist.

15. Landmaschine nach einem der vorgenannten Ansprüche, **dadurch gekennzeichnet, dass** eine optische und/oder akustische Anzeige einer Störung der Sensoreinheit (SE1, SE2, SE3) vorgesehen ist.

16. Landmaschine nach einem der vorgenannten Ansprüche, **dadurch gekennzeichnet, dass** wenigstens streckenweise eine Unterbrechung des Gutstroms vorgesehen ist.
